# EUROPÄISCHE PATENTSCHRIFT

(11) **EP 4 295 665 B1**
(45) Veröffentlichungstag und Bekanntmachung des Hinweises auf die Patenterteilung: **02.09.2026**
(21) Anmeldenummer: 23181067.2
(22) Anmeldetag: 22.06.2023
(51) Int. Cl.: A01F 15/07

(54) **BALLENPRESSE FÜR LANDWIRTSCHAFTLICHES ERNTEGUT**
BALER FOR AGRICULTURAL CROP
PRESSE À BALLES POUR RÉCOLTE AGRICOLE

(30) Priorität: 24.06.2022 DE 102022115782
(43) Veröffentlichungstag der Anmeldung: 27.12.2023
(60) Teilanmeldung: 24203957.6 / 4 466 977
(73) Patentinhaber: Maschinenfabrik Bernard Krone GmbH & Co. KG, 48480 Spelle (DE)
(72) Erfinder: Osthues, Christian, 48477 Hörstel (DE); Olthoff, Daniel, 49808 Lingen (DE); Kalverkamp, Felix, 45665 Recklinghausen (DE)
(74) Vertreter: Engelmann, Kristiana

(56) Entgegenhaltungen:
- EP-A1- 1 077 025
- EP-A1- 3 143 867
- EP-A1- 3 228 178
- EP-B1- 0 893 053
- DE-U1- 29 911 916
- US-A1- 2003 024 407
- US-A1- 2016 374 269
- US-A1- 2019 053 434
- US-B2- 8 261 512

## Beschreibung

Die Erfindung betrifft eine Rundballenpresse für landwirtschaftliches Erntegut nach dem Oberbegriff des Anspruchs 1.

Eine Rundballenpresse ist etwa aus der DE 602 24 751 T2 bekannt. Die offenbarte Rundballenpresse weist als Überführungsstreckenvorrichtung zwei Rampen zur Überführung des gepressten Rundballens von der Presskammer zur Wickeleinrichtung auf. Als problematisch hat sich bei gattungsgemäßen Rundballenpressen erwiesen, dass während ihres Betriebes an Hängen die gepressten Rundballen nicht zuverlässig von der Presskammer zur Wickeleinrichtung überführt werden können. Insbesondere stellt sich das Problem, dass Rundballen bei einer Abwärtsfahrt in der Presskammer oder auf der Überführungsstrecke verbleiben und nicht ohne manuelles Eingreifen, wozu der Betrieb zu unterbrechen ist, zur Wickeleinrichtung zu überführen sind. Bei einer Aufwärtsfahrt stellt sich dagegen das Problem, das Rundballen auf der Überführungsstrecke derart beschleunigen, dass sie über die Wickeleinrichtung hinaus überführt werden.

Eine weitere Rundballenpresse mit einer integrierten Wickelvorrichtung ist aus der Schrift EP 1 077 025 A1 bekannt. Die dort offenbarten Förderelemente sind getrennt voneinander verschwenkbar.

Die Schrift EP 3 228 178 A1 offenbart ebenfalls eine Rundballenpresse mit einer zusätzlichen Wickeleinrichtung. Zur Überführung eines fertig gewickelten Rundballens von der Presskammer in die Wickeleinrichtung ist eine Wippenkonstruktion vorgesehen, die mittels eines Hydraulikzylinders zwischen verschiedenen Schwenkstellungen hin und her verstellbar ist. Die Schrift US 2003/002447 A1 zeigt eine Kombination einer Rundballenpresse mit einer Wickeleinrichtung, bei der der Wickeltisch um eine Drehachse schwenkbar ist, um eine Rutsche für die Ballen Aufnahme in eine untere und nach vorne verlagert Position zu bringen, in der ein Ballen auf die Rutsche fällt. In der Annahmestellung der Rutsche steht der Wickeltisch etwa senkrecht. Wenn der Wickeltisch in seine Wickelstellung zurückkehrt, folgt die Rutsche dieser Schwenkbewegung. Die Schrift EP 3 143 867 A1 offenbart eine Kombination einer Rundballenpresse mit einer Wickeleinrichtung, dessen Wickeltisch zwischen einer Annahmestellung und einer Wickelstellung verfahrbar ist. Der Wickeltisch kann in verschiedene Schwenkstellungen verstellt werden.

Aufgabe der vorliegenden Erfindung ist die Weiterbildung der gattungsgemäßen Rundballenpresse derart, dass die Zuverlässigkeit der Überführung des gepressten Rundballens erhöht ist.

Die Aufgabe wird durch die kennzeichnenden Merkmale des Anspruchs 1 gelöst.

Die Überführungseinrichtung weist erfindungsgemäß ein Überführungsantriebselement auf. Das Überführungsantriebselement ist relativ zur Überführungsstreckenvorrichtung zumindest anteilig, insbesondere vollständig, in die Überführungsrichtung in zumindest eine Antreibestellung beweglich gelagert, um den gepressten Rundballen zur Wickeleinrichtung anzutreiben. In der Antreibestellung des Überführungsantriebselementes ist die Überführungsstreckenvorrichtung zumindest teilweise zwischen dem Überführungsantriebselement und einer Aufstandsebene der Rundballenpresse angeordnet.

Bei der Rundballenpresse handelt es sich in der Regel um eine im Betrieb von einer Zugmaschine in eine Fahrtrichtung über eine landwirtschaftliche Fläche gezogene mobile landwirtschaftliche Maschine, die zur Aufnahme von Heu und/oder Gras als Erntegut und zur Ausbildung eines zylindrischen und umhüllten Rundballens daraus ausgebildet ist. Die Rundballenpresse kann aber auch als selbstfahrende landwirtschaftliche Maschine ausgebildet sein. Die Rundballenpresse weist ein Fahrwerk mit zumindest zwei Rädern auf. Die Aufstandsebene ist eine virtuelle Ebene, die die Räder berührt, die Rundballenpresse nicht schneidet und sich in die Fahrtrichtung erstreckt. Bei einem Betrieb der Rundballenpresse auf einer horizontalen landwirtschaftlichen Fläche erstreckt sich die Aufstandsebene horizontal.

Die Überführungseinrichtung ist insbesondere derart ausgebildet, dass der gepresste Rundballen zumindest bei horizontaler Anordnung der Aufstandsebene über die Überführungsstrecke von der Presskammer zur Wickeleinrichtung rollen oder gleiten kann, ohne dass währenddessen eine Krafteinwirkung in die Überführungsrichtung auf den Rundballen notwendig ist. Die Überführungsstrecke ist bevorzugt derart ausgebildet, dass der Rundballen während der Überführung keine wesentliche Richtungsänderung erfährt. Die Überführungsstrecke erstreckt sich vorzugsweise zumindest teilweise geneigt zur Aufstandsebene. Die Überführungsstrecke wird insbesondere durch eine Mehrzahl von Elementen der Überführungseinrichtung oder ihren von der Aufstandsebene abgewandten Überführungsoberflächen ausgebildet, die in die Überführungsrichtung derart geringfügig voneinander beabstandet sind, dass Rundballen üblicher Größe in einer fließenden Bewegung über sie hinweg zu überführen sind.

Die Überführungsstreckenvorrichtung ist zwischen der Presskammer und der Wickeleinrichtung angeordnet und weist bevorzugt zumindest einen Teil der Elemente und/oder der Überführungsoberflächen auf. In der ersten Stellung bildet die Überführungsstreckenvorrichtung insbesondere insofern einen überwiegenden Teil der Überführungsstrecke aus, als der von der Überführungsstreckenvorrichtung ausgebildete Teil der Überführungsstrecke zumindest die Hälfte der in die Überführungsrichtung gemessenen Länge der gesamten Überführungsstrecke ausmacht. Der erste Teil der Überführungsstrecke ist bevorzugt zusammenhängend und umfasst vorzugsweise, je nach Stellung des Überführungsantriebselementes, ein an die Presskammer und/oder die Wickeleinrichtung angrenzendes Ende der Überführungsstrecke.

Die Präposition "zwischen" ist insbesondere derart zu verstehen, dass eine zur Aufstandsebene rechtwinklige, virtuelle Gerade sowohl die Überführungsstreckenvorrichtung als auch das Überführungsantriebselement schneidet. Das Überführungsantriebselement ist in der Antreibestellung oberhalb der Überführungsstreckenvorrichtung und insbesondere oberhalb des ersten Teils der Überführungsstrecke angeordnet. Bevorzugt ist das Überführungsantriebselement sowohl relativ zur Überführungsstreckenvorrichtung als auch relativ zu einem Maschinenrahmen der Rundballenpresse beweglich. Durch die Beweglichkeit des Überführungsantriebselementes zumindest anteilig in die Überführungsrichtung ist ein Anschieben des gepressten Rundballens, der während der Überführung ebenso oberhalb des ersten Teils angeordnet ist, in die Überführungsrichtung ermöglicht. Durch das Überführungsantriebselement ist eine zuverlässige Überführung des gepressten Rundballens zur Wickeleinrichtung auch bei einer steilen Abwärtsfahrt zu erreichen.

Das Überführungsantriebselement ist insbesondere als drehbare Rolle ausgebildet, deren Drehachse sich quer zur Überführungsrichtung erstreckt und relativ zur Überführungsstreckenvorrichtung beweglich ist. Die vor- und nachgenannten Stellungen werden insbesondere einzig durch die Position der Drehachse und nicht durch eine Drehstellung des Überführungsantriebselementes definiert. Durch die Drehbarkeit des Überführungsantriebselementes wird ein Einfluss auf eine etwaige Rotation des überführten Rundballens und damit seine Bremsung vermieden. In der Antreibestellung ist das Überführungsantriebselement insbesondere derart weit von der Überführungsstreckenvorrichtung beabstandet, dass die im Betrieb auf einen Rundballen üblicher Größe übertragene Kraft zumindest phasenweise zumindest im Wesentlichen in die Überführungsrichtung gerichtet ist.

Die Überführungseinrichtung weist zumindest eine Stelleinrichtung mit einem Stellelement zur Bewegung des Antriebselementes zumindest in die Antreibestellung auf. Bevorzugt dient die Stelleinrichtung zur Bewegung des Überführungsantriebselementes in sämtliche seiner Stellungen. Dafür ist es weiterhin bevorzugt, dass eine Bewegung des Überführungsantriebselementes nicht ohne eine Bewegung der Stelleinrichtung möglich ist. Als Stellelement ist insbesondere ein Linearaktor, bevorzugt ein hydraulischer, pneumatischer oder elektrischer Linearaktor, vorgesehen. Durch die Stelleinrichtung ist in jeder Betriebssituation eine bedarfsgerechte Bewegung des Überführungsantriebselementes ermöglicht.

Die Überführungsstreckenvorrichtung weist vorzugsweise zumindest eine Überführungsstreckenvorrichtungseinheit auf. Bevorzugt ist die Überführungsstreckenvorrichtungseinheit aus einer ersten Stellung, in der sie sich bei Anordnung der Überführungsstreckenvorrichtung in ihrer ersten Stellung angeordnet ist, relativ zu dem Maschinenrahmen der Rundballenpresse um eine Streckenschwenkachse in eine zweite Stellung schwenkbeweglich gelagert. Besonders bevorzugt ist die Überführungsstreckenvorrichtungseinheit in der zweiten Stellung angeordnet, wenn die Überführungsstreckenvorrichtung auch in einer zweiten Stellung angeordnet ist. In der zweiten Stellung kann die Überführungsstreckenvorrichtungseinheit die Überführungsstrecke mit ausbilden. Die Schwenkrichtung der Überführungsstreckenvorrichtungseinheit aus der ersten Stellung in die zweite Stellung entspricht bevorzugt der Schwenkrichtung des Überführungsantriebselementes von der Aufnahmestützstellung in die Antreibestellung. Die Streckenschwenkachse ist insbesondere beabstandet von der Antriebsschwenkachse angeordnet. Die Streckenschwenkachse schneidet die Überführungsstreckenvorrichtungseinheit insbesondere in ihrem der Wickeleinrichtung zumindest in der ersten Stellung zugewandten Endbereich. Die Überführungsstreckenvorrichtung kann zudem einen Abschnitt aufweisen, der die Überführungsstrecke mit ausbildet, und zumindest teilweise zum Maschinenrahmen ortsfest gelagert ist. Durch die schwenkbewegliche Lagerung der Überführungsstreckenvorrichtungseinheit lässt sich insbesondere ein Gefälle der Überführungsstrecke erhöhen und so die Überführung des Rundballens weiter unterstützen.

Die Stelleinrichtung weist bevorzugt ein Übertragungselement auf, mittels dem sie zu einer Bewegung der Überführungsstreckenvorrichtungseinheit von ihrer ersten in ihre zweite Stellung ausgebildet ist. Das bedeutet, dass die Stelleinrichtung sowohl zur Bewegung des Überführungsantriebselementes oder der Überführungsantriebsvorrichtung als auch zur Bewegung der Überführungsstreckenvorrichtungseinheit ausgebildet ist. Das Übertragungselement ist bevorzugt an dem Stellelement, dem ersten oder dem zweiten Lenker oder der Überführungsantriebsvorrichtung angeordnet. Besonders bevorzugt handelt es sich bei dem Übertragungselement um eine drehbare Rolle, deren Drehachse insbesondere mit der Schwenkachse zusammenfällt, um die der erste Lenker relativ zum Stellelement schwenkbar ist. Durch das Übertragungselement werden die vorgenannten Vorteile der beweglichen Überführungsstreckenvorrichtungseinheit zuverlässig erreicht, ohne dass dafür eine gesonderte Stelleinrichtung nötig ist.

Vorzugsweise ist das Überführungsantriebselement aus der Antreibestellung relativ zum Überführungsstreckenelement insbesondere auf den ersten Teil zu und/oder zum Maschinenrahmen zumindest in eine Aufnahmestützstellung beweglich gelagert, in der das Überführungsantriebselement einen zweiten Teil der Überführungsstrecke ausbildet. Durch diese Lagerung des Überführungsantriebselementes kann es auch ohne, vor oder nach der Notwendigkeit zum Antreiben des Rundballens zur Überführung des Rundballens beitragen, indem es die Überführungsstrecke optimiert.

Bevorzugt ist das Überführungsantriebselement derart gelagert, dass der zweite Teil der Überführungsstrecke zwischen der Presskammer und dem ersten Teil der Überführungsstrecke angeordnet ist. Besonders bevorzugt bildet das Überführungsantriebselement in der Aufnahmestützstellung das an die Presskammer angrenzende Ende der Überführungsstrecke aus. Durch diese Anordnung des zweiten Teils ist das Überführungsantriebselement während der Überführung desselben Rundballens zunächst zur Stützung des Rundballens und anschließend zu seinem Antreiben über die restliche Überführungsstrecke nutzbar und so die Wirksamkeit des Überführungsantriebselementes maximiert.

Über das Überführungsantriebselement hinaus weist die Rundballenpresse bevorzugt ein Klappenelement auf, das in einer Pressstellung die Presskammer mit ausbildet und das zur Öffnung der Presskammer zumindest anteilig zur Überführungseinrichtung hin beweglich ist. Das Klappenelement ist nicht Teil der Überführungseinrichtung. Vorzugsweise erstreckt sich das Überführungsantriebselement in der Aufnahmestützstellung in einem zur Presskammer ortsfesten Raumabschnitt, und/ oder Flächenabschnitt eines Längsschnittes, in den sich das Klappenelement in der Pressstellung erstreckt. Das Überführungsantriebselement kann also nicht in der Abstützstellung angeordnet sein, während das Klappenelement (noch) in der Pressstellung angeordnet ist. Bei dem Raumabschnitt handelt es sich um einen Raum, dessen Grenzen fiktiv sind, und der in der Aufnahmestützstellung von dem Überführungsantriebselement beansprucht wird. Im Falle einer Ausbildung des Überführungsantriebselementes als Rolle ist der Raumabschnitt insbesondere zylinderförmig. Bei einem konventionell ausgebildeten Klappenelement lässt sich durch diese Definition der Aufnahmestützstellung die Überführungsstrecke derart ausbilden, dass ein fließender Übergang für den gepressten Rundballen aus der Presskammer auf die Überführungsstrecke möglich ist und eine bestmögliche Umwandlung der Lageenergie des Rundballens in der Presskammer in Bewegungsenergie während der Überführung ermöglicht ist. Insbesondere wird eine Bewegung des Rundballens entgegen der Überführungsrichtung gegen eine Starterwalze verhindert, die die Presskammer mit ausbildet.

Besonders bevorzugt ist das Überführungsantriebselement über die Aufnahmestützstellung hinaus in eine Ruhestellung beweglich. In der Ruhestellung ist das Überführungsantriebselement insbesondere unterhalb des Klappenelementes anzuordnen. Von hier aus ist es nach der Öffnung des Klappenelementes bei einer konventionellen Ausbildung dessen besonders schnell in die Aufnahmestützstellung zu bewegen. Die Bewegung erfolgt im Betrieb insbesondere automatisiert in Abhängigkeit von einer Stellung des Klappenelementes.

Alternativ zu den Merkmalen des kennzeichnenden Teils des Anspruchs 1 wird die Aufgabe auch durch ein Überführungsantriebselement gelöst, das in die Ruhestellung und in die Aufnahmestützstellung und nicht notwendigerweise in die Antreibestellung beweglich gelagert ist.

Vorzugsweise ist das Überführungsantriebselement zumindest anteilig schwenkbeweglich um eine Antriebsschwenkachse gelagert, zu der die Drehachse insbesondere einen unveränderlichen Abstand hat. Die Antriebsschwenkachse ist vorzugsweise rechtwinklig zur Überführungsrichtung angeordnet. Durch diese Lagerung wird das Ausfallrisiko der Überführungseinrichtung gering gehalten. Die Antriebsschwenkachse ist bevorzugt ortsfest zum Maschinenrahmen und/oder zur Überführungsstreckenvorrichtung in der ersten Stellung angeordnet.

Besonders bevorzugt ist die Antriebsschwenkachse in einem Zwischenraum zwischen der Aufstandsebene und einer Referenzebene angeordnet, in dem auch die Überführungsstreckenvorrichtung in der ersten Stellung angeordnet ist. Die Referenzebene grenzt dabei an die Überführungsstreckenvorrichtung an. Insbesondere ist die Antriebsschwenkachse zwischen zumindest einem Teil der Überführungsstrecke oder der Überführungsstreckenvorrichtung und der Aufstandsebene angeordnet. Durch diese Anordnung der Antriebsschwenkachse lässt sich das Überführungsantriebselement bereits mit einem kleinen Schwenkwinkel von der Aufnahmestützstellung in die Antreibestellung bewegen.

Vorzugsweise ist das Überführungsantriebselement in eine Abgabestützstellung beweglich gelagert. In der Abgabestützstellung bildet eine Überführungsantriebsvorrichtung, die das Überführungsantriebselement umfasst und insbesondere insgesamt um die Antriebsschwenkachse schwenkbeweglich ist, einen weiteren Teil der Überführungsstrecke aus. Der weitere Teil der Überführungsstrecke ist zwischen dem von der Überführungsstreckenvorrichtung ausgebildeten ersten Teil der Überführungsstrecke und der Wickeleinrichtung angeordnet. Insbesondere ist das Überführungsantriebselement aus der Aufnahmestützstellung über die Antreibestellung hinaus in die Abgabestützstellung schwenkbeweglich. In der Abgabestützstellung bildet das Überführungsantriebselement selbst oder ein weiteres Teil der Überführungsantriebsvorrichtung den weiteren Teil der Überführungsstrecke aus. Der weitere Teil der Überführungsstrecke wird insbesondere alternativ zum zweiten Teil der Überführungsstrecke ausgebildet.

Das Überführungsantriebselement ist insbesondere derart von der Überführungsantriebsvorrichtung umfasst, als es über seine optionale Drehbarkeit um die Drehachse hinaus nur gemeinsam mit den weiteren Teilen der Überführungsantriebsvorrichtung beweglich ist. Mit der Beweglichkeit des Überführungsantriebselementes in die Abgabestützstellung und dem dadurch zu erreichenden, weiteren Teil der Überführungsstrecke kommt dem Überführungsantriebselement eine weitere die Überführung von Rundballen unterstützende Funktion zu. Vorteil der Abgabestützstellung ist insbesondere, dass in ihr auch ein Rundballen, der zuvor zwischen dem Überführungsantriebselement in der Antreibestellung und der Presskammer auf der Überführungsstrecke angeordnet war und für den das Überführungsantriebselement ein Hindernis darstellte, noch zur Wickeleinrichtung überführt werden kann.

Besonders bevorzugt ist die Stelleinrichtung zu einer Verschwenkung des Überführungsantriebselementes um zumindest 15°, bevorzugt um zumindest 120°, besonders bevorzugt um zumindest 160° ausgebildet. Dieser Winkel wird insbesondere mit einer Bewegung aus der Ruhestellung in die Abgabestützstellung überstrichen. Diese Ausbildung der Stelleinrichtung erlaubt die Erreichung sämtlicher hilfreicher Stellungen auch bei einer kompakten Anordnung der Antriebsschwenkachse unmittelbar unterhalb der Überführungsstrecke.

Das Stellelement ist zumindest in einer der Stellungen des Überführungsantriebselementes und in der ersten Stellung der Überführungsstreckenvorrichtung zumindest teilweise zwischen der Überführungsstreckenvorrichtung und der Aufstandsebene angeordnet. Eine Stellrichtung, in die das Stellelement zumindest teilweise beweglich ist, ist insbesondere um weniger als 45° zur Aufstandsebene angewinkelt. Die Präposition "zwischen" ist insbesondere derart zu verstehen, dass eine zur Aufstandsebene rechtwinklige, virtuelle Gerade sowohl die Überführungsstreckenvorrichtung als auch das Stellelement schneidet. Durch diese Anordnung des Stellelementes lässt es sich effektiv vor dem Rundballen, etwaigen Erntegutbestandteilen sowie Fremdkörpern und damit vor Ausfällen schützen.

Die Stelleinrichtung umfasst bevorzugt eine das Stellelement mit dem Überführungsantriebselement koppelnde Lenkeranordnung. Die Lenkeranordnung umfasst einen ersten Lenker, der schwenkbeweglich am Stellelement und schwenkbeweglich an dem Maschinenrahmen der Rundballenpresse gelagert ist. Ferner umfasst die Lenkeranordnung einen zweiten Lenker, der schwenkbeweglich am ersten Lenker und schwenkbeweglich am Überführungsantriebselement gelagert ist. Bevorzugt sind sämtliche Schwenkachsen parallel zur Antriebsschwenkachse angeordnet. Besonders bevorzugt entspricht die Achse, um die der zweite Lenker schwenkbeweglich am ersten Lenker angeordnet ist, der Achse, um die der erste Lenker schwenkbeweglich am Stellelement angeordnet ist. Durch die Lenkeranordnung lässt sich eine weitreichende Schwenkbewegung des Überführungsantriebselementes bei einem nur kurzen notwendigen Verfahrweg und damit Bauraum des Stellelementes erreichen.

Vorzugsweise ist die Stelleinrichtung derart ausgebildet, dass das Übertragungselement sich während einer Bewegung des Überführungsantriebselementes von der Aufnahmestützstellung in die Abgabestützstellung an ein Übertragungsgegenelement der Überführungsstreckenvorrichtungseinheit anlegt. Besonders bevorzugt legt es sich während einer Bewegung des Überführungsantriebselementes von der Aufnahmestützstellung in die Antreibestellung an das Übertragungsgegenelement an. Insbesondere legt das Übertragungselement sich in einer Kontaktaufnahmestellung des Überführungsantriebselementes an das Übertragungsgegenelement an. Mit der weiteren Verschwenkung des Überführungsantriebselementes bleibt das Übertragungselement mit dem Übertragungsgegenelement in Kontakt.

Bis zur Kontaktaufnahmestellung ist das Überführungsantriebselement aus der Ruhestellung insbesondere unabhängig von der Überführungsstreckenvorrichtungseinheit beweglich. Hierdurch wird sichergestellt, dass das Überführungsantriebselement schon unmittelbar, nachdem der Rundballen es übertreten hat, an ihn anzulegen ist. Bevorzugt weist die Überführungsstreckenvorrichtungseinheit eine von der Streckenschwenkachse beabstandete Abstützoberfläche auf, die derart ausgebildet ist, dass die Überführungsstreckenvorrichtungseinheit zumindest in ihrer ersten Stellung und/oder bei Anordnung des Überführungsantriebselementes in der Aufnahmestützstellung und/oder der Ruhestellung mit der Abstützoberfläche an einem Abstützelement des Maschinenrahmens lösbar anliegt. Die Abstützoberfläche ist insbesondere an einem von der Streckenschwenkachse abgewandten und/oder der Presskammer zugewandten Ende der Überführungsstreckenvorrichtungseinheit angeordnet. Besonders bevorzugt hat die Überführungsstreckenvorrichtungseinheit in der Aufnahmestützstellung des Überführungsantriebselementes keinen Kontakt dazu. Mit der Verschwenkung des Überführungsantriebselementes über die Kontaktaufnahmestellung hinaus wird die Abstützoberfläche insbesondere vom Abstützelement gelöst. Durch die Abstützoberfläche wird eine unnötige Belastung der Stelleinrichtung durch einen auf der Überführungsstreckenvorrichtungseinheit aufliegenden Rundballen vermieden, dessen Schwerkraft stattdessen unmittelbar in den Maschinenrahmen abgeleitet wird.

Vorzugsweise sind/ist das Übertragungselement und/oder das Übertragungsgegenelement derart ausgeformt, dass die Bewegung der Überführungsstreckenvorrichtungseinheit aus ihrer ersten Stellung in ihrer zweiten Stellung endet, während das Überführungsantriebselement von der Aufnahmestützstellung in die Abgabestützstellung, insbesondere in die Antreibestellung, bewegt wird. Die Bewegung endet dann in der zweiten Stellung, wenn sich die Überführungsstreckenvorrichtungseinheit mit einer weiteren Bewegung des Überführungsantriebselementes zurück auf die erste Stellung zubewegt oder in der zweiten Stellung stehen bleibt. Durch diese Ausformung lässt sich zum einen erreichen, dass das Überführungsantriebselement den Rundballen möglichst weitgehend bis zur Wickeleinrichtung antreiben kann, und zum anderen erreichen, dass die Überführungsstreckenvorrichtungseinheit nicht zu weit von der Presskammer beabstandet wird. Dies ist von Vorteil, um zu vermeiden, dass etwaiges insbesondere unbeabsichtigt aus der Presskammer austretendes Erntegut unter einen Teil der Überführungsstreckenvorrichtung, insbesondere in den Bereich der Stelleinrichtung, gelangt und zu längeren Stillstandszeiten führt.

Besonders bevorzugt weist das Übertragungsgegenelement im Längsschnitt eine Übertragungskontur auf, die einen ersten insbesondere gerade verlaufenden Konturabschnitt und einen zum ersten Konturabschnitt angewinkelten, insbesondere gerade verlaufenden, zweiten Konturabschnitt aufweist. Die Konturabschnitte sind insbesondere derart zueinander angewinkelt, dass die Überführungsstreckenvorrichtungseinheit bei Kontakt des Übertragungselementes mit dem ersten Konturabschnitt in die zweite Stellung zu bewegen ist und bei Kontakt der Übertragungseinheit mit dem zweiten Konturabschnitt in der zweiten Stellung verbleibt oder zurückbewegt wird. Die vorstehenden Vorteile lassen sich so mit einfachen Mitteln erreichen. Es versteht sich, dass das Übertragungselement und das Übertragungsgegenelement alternativ vertauscht zueinander angeordnet und/oder ausgebildet sein können.

Vorzugsweise umfasst die Überführungsstreckenvorrichtung zumindest zwei Überführungsstreckenvorrichtungseinheiten. Diese sind von einer zur Aufstandsebene rechtwinkligen und zur Überführungsrichtung parallelen Längsmittelebene, die sich zwischen den beiden Überführungsstreckenvorrichtungseinheiten erstreckt, jeweils beabstandet und insbesondere nebeneinander angeordnet. Insbesondere sind die Überführungsstreckenvorrichtungseinheiten gleichartig oder spiegelsymmetrisch zur Längsmittelebene ausgebildet. Durch die Trennung der beiden Überführungsstreckenvorrichtungseinheiten quer zur Überführungsrichtung wird erreicht, dass der Rundballen während der Überführung zumindest phasenweise nur mit seitlichen Abschnitten seiner Mantelfläche auf der Überführungsstreckenvorrichtung aufliegt. Dies wiederum führt zu einem ruhigeren und damit effizienteren Gleiten oder Rollen des Rundballens zur Wickeleinrichtung.

Die das Überführungsantriebselement umfassende Überführungsantriebsvorrichtung und/oder die zumindest eine Überführungsstreckenvorrichtungseinheit weisen/weist bevorzugt zumindest ein Rahmenelement oder insbesondere zumindest ein drehbar am Rahmenelement gelagertes Rollenelement auf. Insbesondere ist das Überführungsantriebselement als Rollenelement ausgebildet. Durch das Rollenelement wird ein Gleiten des Rundballens in die Überführungsrichtung ermöglicht, bei dem gegenüber einem Rollen die Lageenergie zweckdienlicher in kinetische Energie umgesetzt wird. Ein Abwickeln des Rundballens beim Überführen von der Presskammer zur Wickeleinrichtung kann so in der Regel vermieden werden. Die Überführungsstreckenvorrichtungseinheit weist insbesondere eine Mehrzahl von Rollenelementen auf, die zwischen zwei Rahmenelementen gelagert sind. Alternativ oder zusätzlich zu den Rollenelementen weist die Überführungsstreckenvorrichtungseinheit bevorzugt ein sich in die Überführungsrichtung erstreckendes Gleitblech auf. Das zumindest eine Rahmenelement ist relativ zum Maschinenrahmen bevorzugt ausschließlich schwenkbeweglich und erstreckt sich zur jeweiligen Schwenkachse hauptsächlich zumindest im wesentlich radial. Vorzugsweise ist eine Drehachse, um die das zumindest eine Rollenelement der Überführungsstreckenvorrichtungseinheit relativ zum davon umfassten Rahmenelement drehbar gelagert ist, koaxial mit der Streckenschwenkachse angeordnet.

Bevorzugt ist das zumindest eine Rahmenelement, sind insbesondere zwei Rahmenelemente, der Überführungsantriebsvorrichtung zumindest in der Aufnahmestützstellung des Überführungsantriebselementes in einer Draufsicht zumindest teilweise zwischen den zwei Überführungsstreckenvorrichtungseinheiten angeordnet. In der Draufsicht ist die Betrachtungsrichtung insbesondere rechtwinklig zur Aufstandsebene angeordnet. Bei dieser Anordnung des Rahmenelementes bzw. der Rahmenelemente ist die Überführungsantriebsvorrichtung in der Abgabestützstellung besonders gut zur Ausbildung des weiteren Teils der Überführungsstrecke durch das Rahmenelement bzw. die Rahmenelemente geeignet. Dabei weist die Überführungsantriebsvorrichtung bevorzugt zwei weitere Rahmenelemente auf, zwischen denen in der Draufsicht die Überführungsstreckenvorrichtungseinheiten angeordnet sind. Die Rahmenelemente der Überführungsantriebsvorrichtung sind insbesondere in eine Querrichtung versetzt und ortsfest an einem Querträger der Überführungsantriebsvorrichtung angeordnet. An dem Querträger ist bevorzugt zumindest ein Kurbelelement ortsfest angeordnet, das mit der Lenkeranordnung verbunden ist und in die Querrichtung versetzt zu den Rahmenelementen angeordnet ist. Insbesondere weist die Überführungseinrichtung eine Stelleinrichtung pro Überführungsstreckenvorrichtungseinheit auf.

Besonders bevorzugt erstreckt sich ein von der Antriebsschwenkachse beabstandetes Teilstück des Rahmenelementes der Überführungsantriebsvorrichtung länglich in eine Teilstückrichtung, die in der Abgabestützstellung des Überführungsantriebselementes weniger stark zu der Aufstandsebene angewinkelt ist als eine auf die Antriebsschwenkachse bezogene und das Teilstück schneidende Radiale. Die Radiale und die Teilstückrichtung sind bevorzugt um mindestens 10°, insbesondere um mindestens 20° zueinander angewinkelt. Insgesamt weist das Rahmenelement besonders bevorzugt zumindest zwei zueinander angewinkelte Teilstücke auf oder ist S-förmig ausgebildet. Das Teilstück reicht bevorzugt bis zum Überführungsantriebselement. Durch diese Ausbildung des Teilstückes ist es zur Ausbildung des weiteren Teils der Überführungsstrecke geeignet, ohne dass der Rundballen beim Übertritt vom ersten Teil der Überführungsstrecke auf den weiteren Teil der Überführungsstrecke signifikant umgelenkt werden muss.

Ein von der Streckenschwenkachse abgewandtes Ende der Überführungsstreckenvorrichtungseinheit ist bevorzugt von einem Auffangelement ausgebildet, das zumindest in der ersten Stellung der Überführungsstreckenvorrichtung und bei Anordnung des Überführungsantriebselementes in der Aufnahmestützstellung zwischen dem Überführungsantriebselement und der Aufstandsebene angeordnet ist. Das gilt insbesondere auch, wenn das Überführungsantriebselement in der Ruhestellung angeordnet ist. Das Auffangelement ist bevorzugt ortsfest oder einteilig mit dem Rahmenelement der Überführungsstreckenvorrichtungseinheit ausgebildet. Durch das Auffangelement wird insbesondere in der zweiten Stellung der Überführungsstreckenvorrichtungseinheit sichergestellt, dass kein zu großer Spalt zwischen der Überführungsstreckenvorrichtung und der Presskammer entsteht, durch den größere Mengen von Erntegut hindurchtreten könnten.

Das Auffangelement erstreckt sich insbesondere flächig zwischen zwei Rahmenelementen der Überführungsstreckenvorrichtungseinheit. Eine von der Aufstandsebene abgewandte Auffangfläche erstreckt sich im Längsschnitt bevorzugt angewinkelt zu einer auf die Streckenschwenkachse bezogenen Radialen, die die Auffangfläche schneidet, und/oder zur Überführungsrichtung. Insbesondere erstreckt sich die Auffangfläche in der zweiten Stellung der Überführungsstreckenvorrichtungseinheit im Längsschnitt in Richtung der Starterwalze. Vorzugsweise ist die Abstützoberfläche zumindest in der ersten Stellung der Überführungsstreckenvorrichtungseinheit zwischen der Auffangfläche und der Aufstandsebene angeordnet.

Die Überführungsantriebsvorrichtung weist in der Draufsicht bevorzugt zumindest ein Trittelement zwischen den Überführungsstreckenvorrichtungseinheiten auf. Das Trittelement weist bevorzugt zwei zueinander im Längsschnitt angewinkelte Trittflächen auf, wobei sich besonders bevorzugt eine erste Trittfläche zumindest in der Ruhestellung des Überführungsantriebselementes zumindest im Wesentlichen parallel zur Aufstandsebene erstreckt und sich eine zweite Trittfläche zumindest in der Abgabestützstellung des Überführungsantriebselementes zumindest im Wesentlichen parallel zur Aufstandsebene erstreckt. Die Trittfläche ist besonders bevorzugt durch eine konturiertes oder glattes Blech oder durch ein Rost ausgebildet.

Vorzugsweise umfasst die Wickeleinrichtung einen Wickeltisch, der eine Wickelmulde für den gepressten Rundballen ausbildet. Der Wickeltisch weist vorzugsweise einen Wickeltischrahmen und zumindest ein im Betrieb relativ zum Wickeltischrahmen umlaufendes Rotationselement zur Rotation des Rundballens auf. Bei dem Rotationselement handelt es sich insbesondere um einen umlaufenden Gurt. Der Wickeltisch ist relativ zum Maschinenrahmen insbesondere zumindest im Wesentlichen translatorisch beweglich. Der Wickeltisch ist relativ zum Maschinenrahmen bevorzugt von einer Wickelstellung in eine Aufnahmestellung auf die Überführungsstrecke zu beweglich. In der Wickelstellung, in der der Wickeltischrahmen ortsfest zum Maschinenrahmen angeordnet ist, ist der Wickeltisch während der Umwicklung des gepressten Rundballens mit dem Hüllmaterial angeordnet. In der Aufnahmestellung befindet sich der Wickeltisch, während der Rundballen von der Überführungseinrichtung auf den Wickeltisch aufgegeben wird. Bei der Aufnahmestellung handelt es sich insbesondere um eine Endstellung, über die der Wickeltisch ausgehend von der Wickelstellung nicht hinaus beweglich ist. In der Aufnahmestellung ist der Wickeltisch bevorzugt näher zur Aufstandsebene und/oder näher zur Überführungseinrichtung angeordnet als in der Wickelstellung. Besonders bevorzugt ist der Wickeltisch aus der Aufnahmestellung über die Wickelstellung hinaus in eine Ausgabestellung zur Ausgabe des gepressten und umwickelten Rundballens aus der Rundballenpresse überführbar ausgebildet.

Vorzugsweise weist die Wickeleinrichtung ein Bremsrollenelement auf, das drehbar um eine zum Wickeltischrahmen ortsfeste Bremsrollendrehachse gelagert ist. Das Bremsrollenelement ist zumindest in der Wickelstellung zwischen der Wickelmulde und der Überführungseinrichtung angeordnet. Bevorzugt steht das Bremsrollenelement in der Wickelstellung entgegen der Überführungsrichtung vom Wickeltisch ab. Das Bremsrollenelement dient dazu, den von der Überführungseinrichtung getragenen und in die Überführungsrichtung bewegten Rundballen abzubremsen, falls der Wickeltisch (noch) nicht in der Aufnahmestellung angeordnet ist.

Besonders bevorzugt ist das Bremsrollenelement derart am Wickeltischrahmen gelagert, dass es in der Aufnahmestellung des Wickeltisches zwischen zumindest einem Teil der Überführungsstreckenvorrichtung und der Aufstandsebene angeordnet ist. Somit behindert es die übliche Übergabe des Rundballens von der Überführungsstrecke in die Wickeleinrichtung nicht. Alternativ ist denkbar, dass das Bremsrollenelement in der Aufnahmestellung die Überführungsstrecke mit ausbildet.

Weitere Einzelheiten und Vorteile der Erfindung sind den nachfolgend beschriebenen, schematisch dargestellten Figuren zu entnehmen; es zeigen:
- Fig. 1: eine Seitenansicht einer erfindungsgemäßen und an eine Zugmaschine gekoppelten Rundballenpresse,
- Fig. 2: einen Längsschnitt eines Teils der erfindungsgemäßen Rundballenpresse mit dem Überführungsantriebselement in einer Ruhestellung I,
- Fig. 3: den Längsschnitt gemäß Fig. 2 ohne Darstellung eines Klappenelementes mit dem Überführungsantriebselement in einer Aufnahmestützstellung II,
- Fig. 4: den Längsschnitt gemäß Fig. 3 mit dem Überführungsantriebselement in einer Kontaktaufnahmestellung III,
- Fig. 5: den Längsschnitt gemäß Fig. 3 mit dem Überführungsantriebselement in einer ersten Antreibestellung IV,
- Fig. 6: den Längsschnitt gemäß Fig. 3 mit dem Überführungsantriebselement in einer zweiten Antreibestellung IV,
- Fig. 7: den Längsschnitt gemäß Fig. 3 mit dem Überführungsantriebselement in einer Abgabestützstellung V,
- Fig. 8: den Längsschnitt gemäß Fig. 7 mit zu einer Wickeleinrichtung überführtem Rundballen,
- Fig. 9: den Längsschnitt gemäß Fig. 3 mit einem Wickeltisch der Wickeleinrichtung in einer Ballenbremsstellung W1,
- Fig. 10: den Längsschnitt gemäß Fig. 3 mit dem Wickeltisch zwischen der Ballenbremsstellung W1 und einer Aufnahmestellung W2,
- Fig. 11: den Längsschnitt gemäß Fig. 3 mit dem Wickeltisch in der Aufnahmestellung W2,
- Fig. 12: den Längsschnitt gemäß Fig. 11 mit zur Wickeleinrichtung überführtem Rundballen,
- Fig. 13: einen vergrößerten teilweisen Längsschnitt der erfindungsgemäßen Rundballenpresse,
- Fig. 14: eine teilweise Draufsicht der erfindungsgemäßen Rundballenpresse,
- Fig. 15: eine perspektivische Darstellung eines Teils der erfindungsgemäßen Rundballenpresse.

Die nachfolgend erläuterten Merkmale der erfindungsgemäßen Ausführungsbeispiele können auch einzeln oder in anderen Kombinationen als dargestellt oder beschrieben Gegenstand der Erfindung sein. Sofern sinnvoll sind funktional gleichwirkende Teil mit identischen Bezugsziffern versehen.

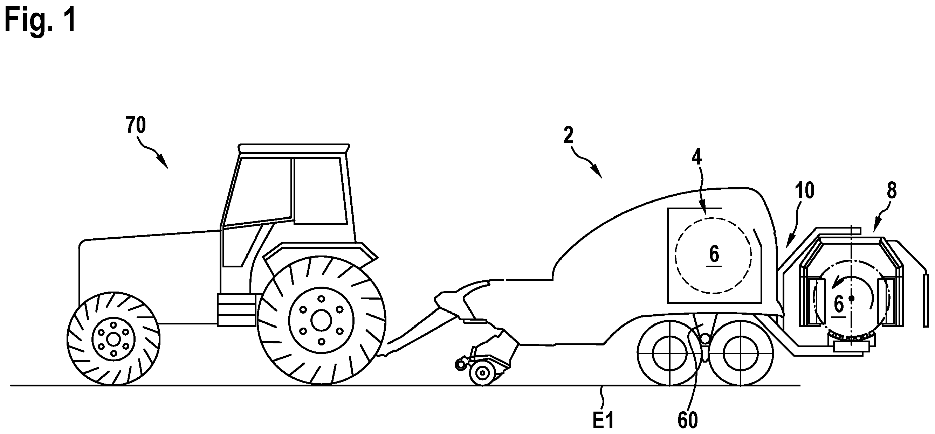

Die erfindungsgemäße Rundballenpresse 2 dient zum Pressen landwirtschaftlichen Erntegutes zu Rundballen 6. Im Betrieb wird die Rundballenpresse 2 von einer Zugmaschine 70 gezogen (Fig. 1). Die Rundballenpresse 2 weist eine Presskammer 4 zum Pressen des Rundballens 6 aus. Außerdem weist die Rundballenpresse 2 eine Wickeleinrichtung 8 zur Umwicklung des gepressten Rundballens 6 mit einem Hüllmaterial auf. Weiterhin weist die Rundballenpresse 2 eine Überführungseinrichtung 10 zwischen der Pressekammer 4 und der Wickeleinrichtung 8 auf.

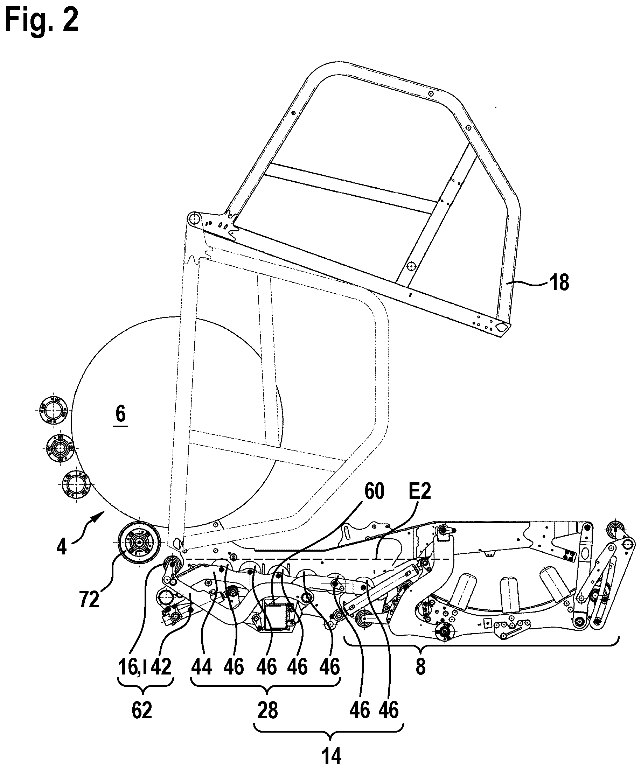

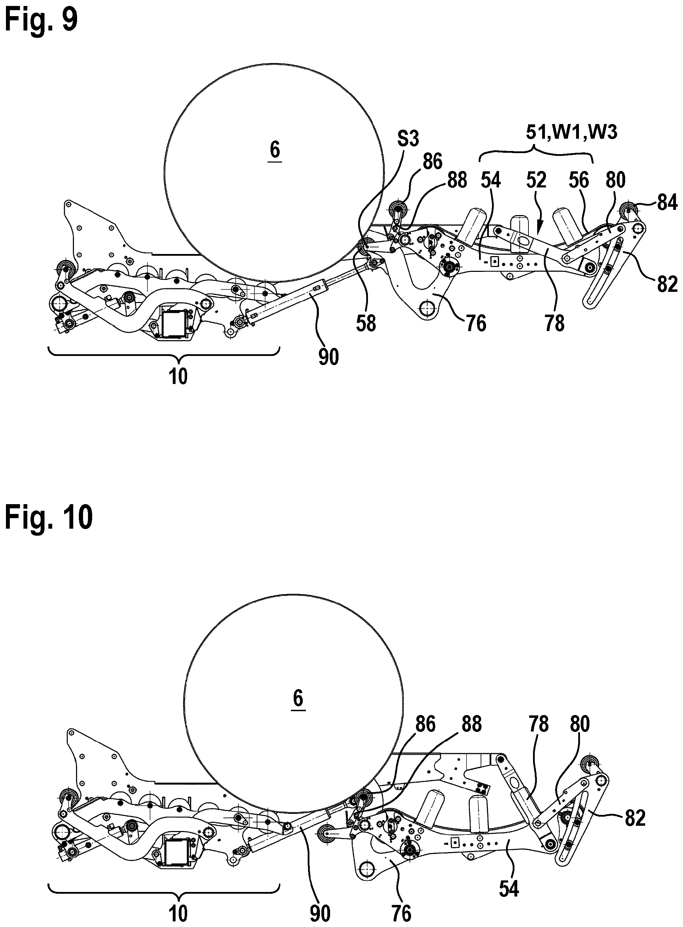

Die Fig. 2 bis 12 zeigen Längsschnitte zumindest der Überführungseinrichtung 10 und der Wickeleinrichtung 8 der Rundballenpresse 2. Die Fig. 2 bis 8 dokumentieren ein erstes, mit der Rundballenpresse 2 durchzuführendes Verfahren zur Überführung des Rundballens 6. Die Fig. 9 bis 12 dokumentieren ein weiteres, mit der Rundballenpresse 2 durchzuführendes Verfahren zur Überführung des Rundballens 6.

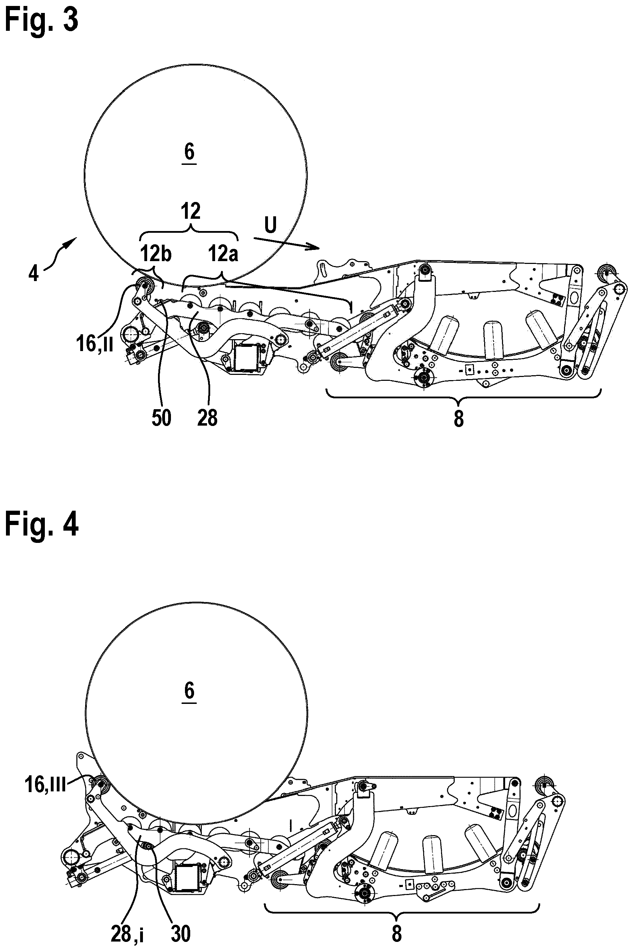

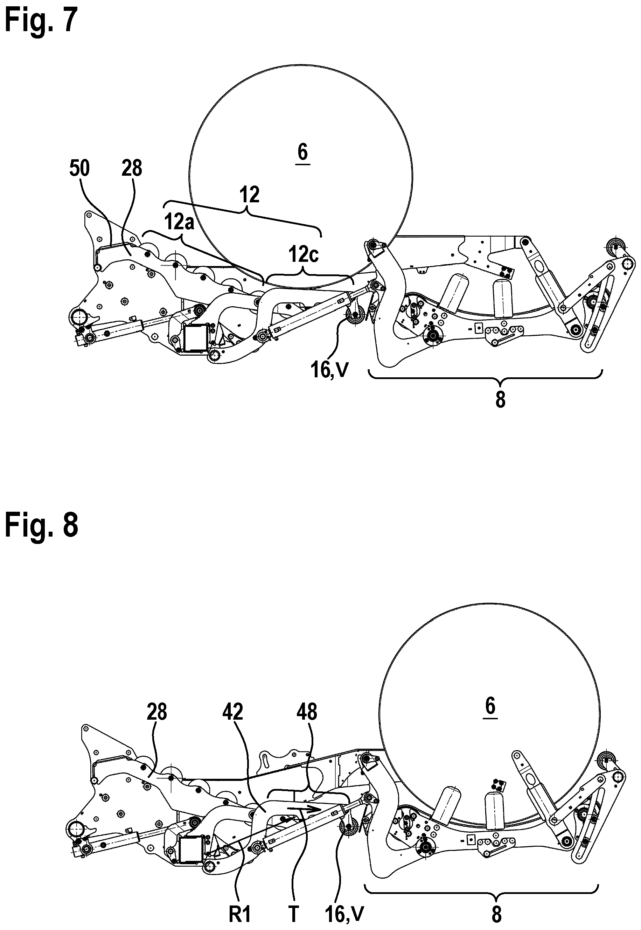

Die Überführungseinrichtung 10 ist zur Ausbildung einer Überführungsstrecke 12 eingerichtet, wovon zumindest ein erster Teil 12a von einer Überführungsstreckenvorrichtung 14 der Überführungseinrichtung 10 ausgebildet wird (Fig. 3 und 7). Über die Überführungsstrecke 12 ist der gepresste Rundballen 6 in eine Überführungsrichtung U von der Presskammer 4 zur Wickeleinrichtung 8 überführbar.

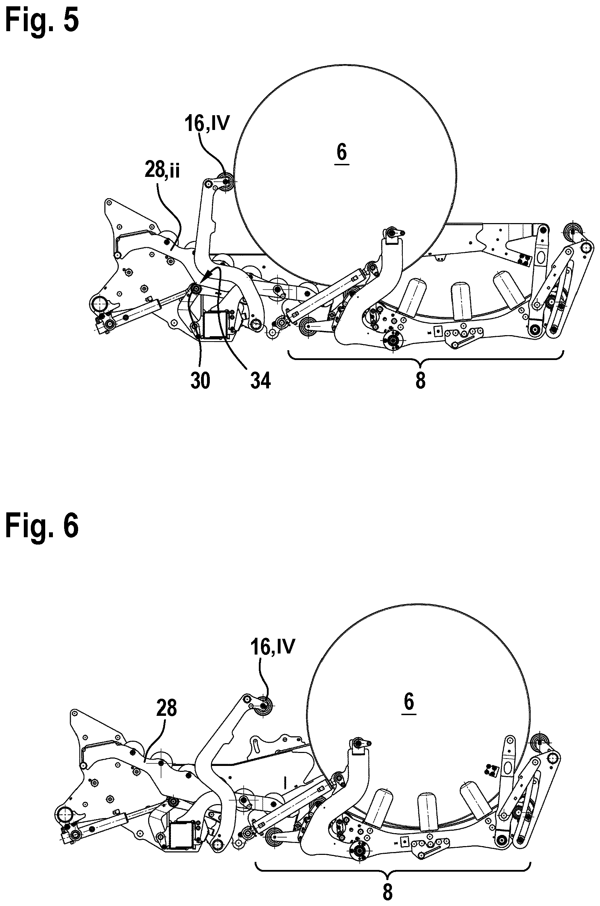

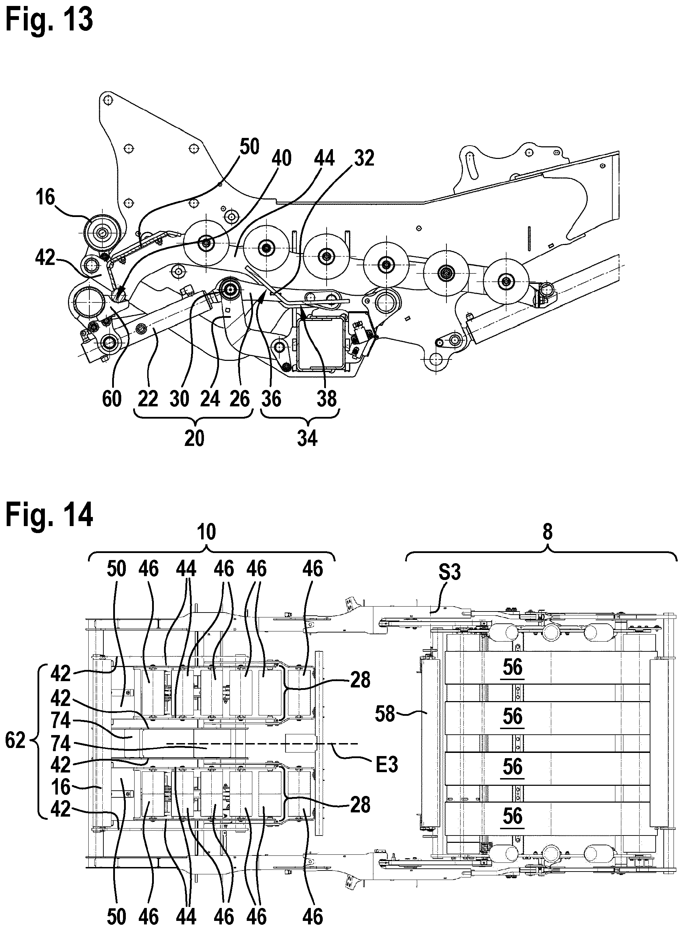

Die Überführungsstreckenvorrichtung 14 weist zwölf Rollenelemente 46 auf, die in zwei Gruppen mit je sechs Rollenelementen 46 angeordnet sind (Fig. 14). Je 4 der Rollenelemente 46 jeder Gruppe sind von einer Überführungsstreckenvorrichtungseinheit 28 umfasst, die außerdem zwei Rahmenelemente 44 umfasst. Die beiden Überführungsstreckenvorrichtungseinheiten 28 sind von einer ersten Stellung i (u.a. Fig. 2) um eine Streckenschwenkachse S2 in eine zweite Stellung ii (u.a. Fig. 5) schwenkbeweglich.

Darüber hinaus weist die Überführungseinrichtung 10 eine Überführungsantriebsvorrichtung 62 auf, die ein Überführungsantriebselement 16 und vier Rahmenelemente 42 umfasst. Die Überführungsantriebsvorrichtung 62 ist schwenkbeweglich um eine Antriebsschwenkachse S1 gelagert. Die Antriebsschwenkachse S1 ist zwischen einer Aufstandsebene E1 (Fig. 1) und einer zur Aufstandsebene E1 parallelen und an die Überführungsstreckenvorrichtung 14 angrenzenden Referenzebene E2 (Fig. 2) angeordnet, wobei die Überführungsstreckenvorrichtung 14 zwischen der Aufstandsebene E1 und der Referenzebene E2 angeordnet ist. Beide Schwenkachsen S1, S2 sind ortsfest zu einem Maschinenrahmen 60 angeordnet.

Fig. 2 zeigt einen gepressten Rundballen 6 in der Presskammer 4. Die Presskammer 4 wird während des Pressens unter anderem von einem Klappenelement 18 in einer gestrichelt dargestellten Pressstellung ausgebildet. Ferner wird sie von einer Starterwalze 72 ausgebildet. Nach Fertigstellung des Rundballens 6 wird das Klappenelement 18 in die dargestellte geöffnete Stellung verschwenkt, um den Rundballen 6 aus der Presskammer 4 auszugeben.

Während das Klappenelement 18 in der Pressstellung angeordnet ist, befindet sich das Überführungsantriebselement 16 in der in Fig. 2 dargestellten Ruhestellung I. Während des Öffnens unmittelbar nach der Öffnung des Klappenelements 18 wird das Überführungsantriebselement um 10° bis 15° aufwärts in eine Aufnahmestützstellung II verschwenkt (Fig. 3) in der es sich zwischen der Starterwalze 72 und der Überführungsstreckenvorrichtung 14 befindet. In der Aufnahmestützstellung II bildet das Überführungsantriebelement 16 einen zweiten Teil 12b der Überführungsstrecke 12 aus.

Nachdem der Rundballen 6 das Überführungsantriebselement 16 in der Aufnahmestützstellung II übertreten hat, wird das Überführungsantriebselement 16 weiter in eine Kontaktaufnahmestellung III (Fig. 4, Erläuterungen s.u.) verschwenkt. Dabei treibt es im dargestellten Verfahren den Rundballen 6 in die Überführungsrichtung U an. Die Kontaktaufnahmestellung III erreicht das Überführungsantriebselement nach einer Verschwenkung aus der Ruhestellung I um etwa 18°. Aus der Kontaktaufnahmestellung III wird das Überführungsantriebselement 16 zum Antreiben des Rundballens 6 weiter in eine erste Antreibestellung IV (Fig. 5) und eine zweite Antreibestellung IV (Fig. 6; ca. 95° aus der Ruhestellung I) verschwenkt, in denen die Überführungsstreckenvorrichtung 14 zwischen dem Überführungsantriebselement 16 und der Aufstandsebene E1 angeordnet ist. Daraufhin ist die Überführung des Rundballens 6 beendet.

Die Fig. 7 und 8 betreffen den unbeabsichtigten Fall, dass ein folgender Rundballen 6 in den Bereich zwischen die Presskammer 4 und das Überführungsantriebselement 16 in der zweiten Antreibestellung IV gelangt. Für diesen Fall ist das Überführungsantriebselement 16 aus der zweiten Antreibestellung IV weiter und aus der Ruhestellung I um fast 180° in die gezeigte Abgabestützstellung V beweglich, in der die Rahmenelemente 42 der Überführungsantriebsvorrichtung 62 einen weiteren Teil 12c der Überführungsstrecke 12 zwischen dem ersten Teil 12a der Überführungsstrecke 12 und der Wickeleinrichtung 8 ausbilden. Dazu ist ein Teilstück 48 der Rahmenelemente 42 länglich in eine Teilstückrichtung T erstreckt, die in der Abgabestützstellung V weniger stark zu der Aufstandsebene E1 angewinkelt ist, als eine auf die Antriebsschwenkachse S1 bezogene und das Teilstück 48 schneidende Radiale R1 (Fig. 8).

Die Überführungseinrichtung 10 umfasst zwei Stelleneinrichtungen 20, die jeweils unter einer der Überführungsstreckenvorrichtungseinheiten 28 angeordnet sind. Die Stelleneinrichtungen 20 umfassen jeweils ein als Hydraulikzylinder ausgebildetes Stellelement 22 und eine Lenkeranordnung zwischen dem Stelleelement 22 und der Überführungsantriebsvorrichtung 62. Die Lenkeranordnung umfasst einen ersten Lenker 24, der schwenkbeweglich am Stellelement 22 und schwenkbeweglich am Maschinenrahmen 60 gelagert ist, und einen zweiten Lenker 26, der schwenkbeweglich am ersten Lenker 24 und schwenkbeweglich an der Überführungsantriebsvorrichtung 62 gelagert ist (Fig. 13).

Die Stelleinrichtungen 20 sind sowohl zur Bewegung der Überführungsantriebsvorrichtung 62 als auch zur Bewegung der Überführungsstreckenvorrichtungseinheiten 28 ausgebildet. Dazu weisen die Stelleinrichtungen 20 Übertragungselemente 30 auf, die zur Bewegung der Überführungsstreckenvorrichtungseinheiten 28 mit davon umfassten Übertragungsgegenelementen 32 zusammenwirken. Die Übertragungsgegenelemente 32 weisen je eine Übertragungskontur 34 auf, die sich aus einem ersten Konturabschnitt 36 und einem zum ersten Konturabschnitt 36 angewinkelten zweiten Konturabschnitt 38 zusammensetzen.

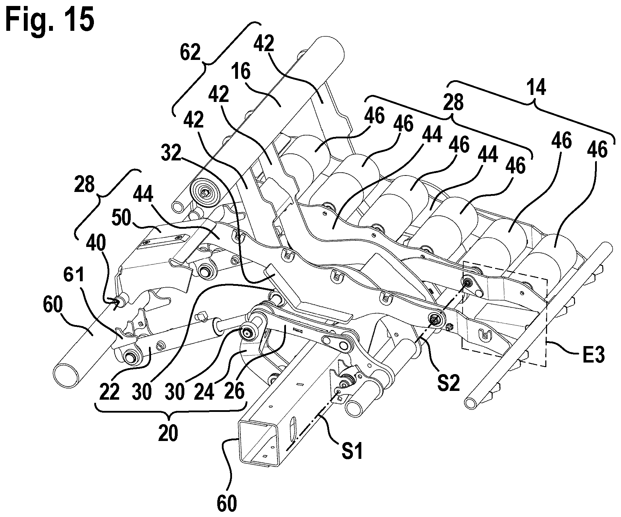

Die Stelleinrichtungen 20 sind derart ausgebildet, dass sich die Übertragungselemente 30 in der Kontaktaufnahmestellung III des Überführungsantriebselementes 16 an die Übertragungsgegenelemente 32 anlegen. Mit einer Aufwärtsverschwenkung des Überführungsantriebselementes 16 aus der Kontaktaufnahmestellung III werden die Überführungsstreckenvorrichtungseinheiten 28 aus der ersten Stellung i (u.a. Fig. 2) in die zweite Stellung ii angehoben (u.a. Fig. 5). Das Übertragungsgegenelement 32 ist derart ausgebildet, dass die Bewegung der Überführungsstreckenvorrichtungseinheiten 28 in der zweiten Stellung ii endet, während das Überführungsantriebselement 16 in die zweite Antreibestellung IV verschwenkt wird. Hierdurch wird ein zu großer Spalt zwischen der Starterwalze 72 und der Überführungsstreckenvorrichtung 14 vermieden. Hierzu dient insbesondere auch das Auffangelement 50 (Fig. 15). Wenn sich das Überführungsantriebselement 16 zwischen der Kontaktaufnahmestellung III und der Ruhestellung I befindet, liegen die Überführungsstreckenvorrichtungseinheiten 28 mit Abstützoberflächen 40 lösbar an einem Abstützelement 61 des Maschinenrahmens 60 an.

Die Überführungsstreckenvorrichtungseinheiten 28 sind spiegelsymmetrisch zu einer Längsmittelebene E3 angeordnet, die in die Überführungsrichtung U und rechtwinklig zur Aufstandsebene E1 angeordnet ist. In der Draufsicht gemäß Fig. 14 ist erkennbar, dass zwei der vier Rahmenelemente 42 der Überführungsantriebsvorrichtung 62 zwischen den Überführungsstreckenvorrichtungseinheiten 28 angeordnet sind. Zwischen diesen beiden Rahmenelementen 42 sind Trittelemente 74 angeordnet.

Die Wickeleinrichtung 8 weist einen Wickeltisch 51 auf, der eine Wickelmulde 50 für den gepressten Rundballen 6 ausbildet (Fig. 9). Ferner umfasst der Wickeltisch 51 einen Wickeltischrahmen 54 und vier im Betrieb relativ zum Wickeltischrahmen 54 umlaufende Rotationselemente 56 (Fig. 14).

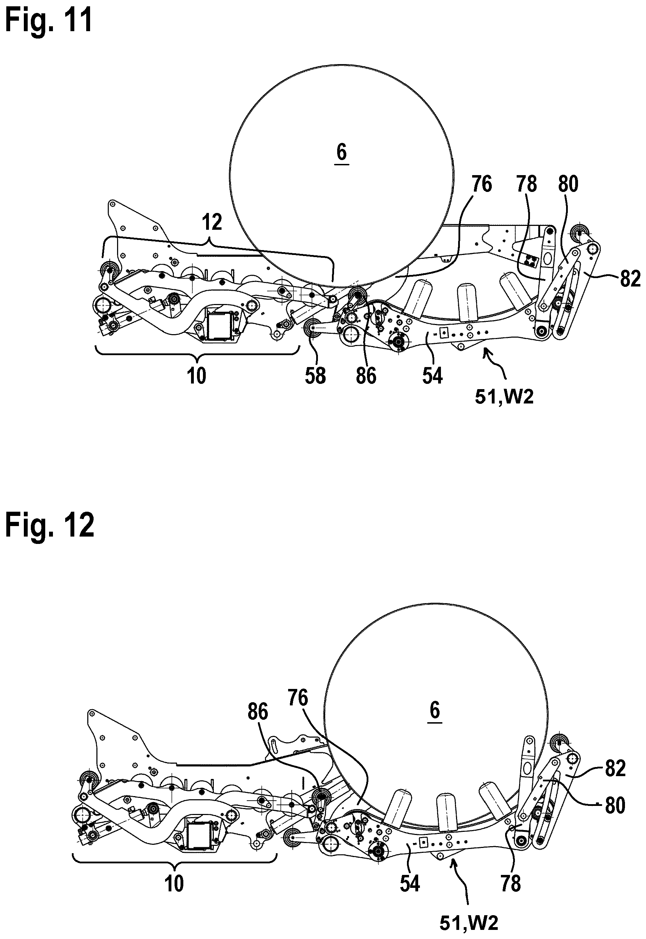

Die Wickeleinrichtung 8 weist darüber hinaus ein Bremsrollenelement 58 auf, dass drehbar um eine zum Wickeltischrahmen 54 ortsfeste Bremsrollenelementdrehachse S3 gelagert ist (Fig. 14). Das Bremsrollenelement 58 ist zumindest in der von Fig. 9 gezeigten Wickelstellung W3 des Wickeltisches 51, die der Ballenbremsstellung W1 gleicht, zwischen der Wickelmulde 52 und der Überführungseinrichtung 10 angeordnet. Das Bremsrollenelement 58 ist derart drehbar um eine Bremsrollendrehachse S3 am Wickeltischrahmen 54 gelagert, dass das Bremsrollenelement 58 in der von Fig. 11 gezeigten Aufnahmestellung W2 des Wickeltisches 51 zwischen der Überführungsstreckenvorrichtung 14 und der Aufsatzebene E1 angeordnet ist.

Zur Überführung des Wickeltisches 51 von der Wickelstellung W3 bzw. Ballenbremsstellung W1 in die Aufnahmestellung W2 und zurück umfasst die Wickeleinrichtung 8 ein Wickeleinrichtungsstellelement 90 sowie einen ersten Wickeltischlenker 76 und einen zweiten Wickeltischlenker 78. Auf der von der Überführungseinrichtung 10 abgewandten Seite ist am Wickeltischrahmen 54 eine Blockiervorrichtung 82 angeordnet, die mittels eines Blockiervorrichtungslenkers 80 mit dem zweiten Wickeltischlenker 78 gekoppelt ist. Die Blockiervorrichtung 82 ist derart gekoppelt, dass sie relativ zum Wickeltischrahmen 54 in einer abgesenkten Stellung angeordnet ist, wenn der Wickeltisch 51 in der Wickelstellung W3 angeordnet ist, und in einer aufgestellten Stellung angeordnet ist, wenn der Wickeltisch 51 in der Aufnahmestellung W2 angeordnet ist. Oberseitig ist an der Blockiervorrichtung 82 ein drehbar gelagertes Blockierrollenelement 84 angeordnet. An der der Überführungseinrichtung 10 zugewandten Seite des Wickeltischrahmens 54 ist ein Sperrrollenelement 86 drehbar an einem Sperrhebel 88 gelagert, der bei der Überführung des Rundballens 6 federbelastet und nachgiebig nach unten verschwenkt und auf ein anschließendes Zurückschwenken hin eine Bewegung des Rundballens 6 entgegen der Überführungsrichtung U verhindern soll.

Gemäß dem von den Fig. 9 bis 12 veranschaulichten Verfahren befindet sich der Wickeltisch 51 bei Öffnung des Klappenelementes 18 in der von der Überführungseinrichtung 10 beabstandeten Ballenbremsstellung W1. Nachdem der Rundballen 6 zum Bremsrollenelement 58 Kontakt aufgenommen hat, wird der Wickeltisch 51 in die Aufnahmestellung W2 bewegt und gerät der Rundballen 6 schwerkraftbedingt auf den Wickeltisch 51. Dabei verhindert die Blockiervorrichtung 82 auch bei einer Aufwärtsfahrt das Herausrollen des Rundballens 6 aus dem Wickeltisch 51. Anschließend wir der Wickeltisch 51 zur Umwicklung des Rundballens 6 in die Wickelstellung W3 verfahren.

## Patentansprüche

1. Rundballenpresse (2) für landwirtschaftliches Erntegut, die eine Presskammer (4) zum Pressen eines Rundballens (6) ausbildet, eine Wickeleinrichtung (8) zur Umwicklung des gepressten Rundballens (6) mit einem Hüllmaterial aufweist und eine Überführungseinrichtung (10) aufweist, die zur Ausbildung einer Überführungsstrecke (12), über die der gepresste Rundballen (6) in eine Überführungsrichtung (U) von der Presskammer (4) zur Wickeleinrichtung (8) überführbar ist, eingerichtet ist, zumindest eine Überführungsstreckenvorrichtung (14) umfasst, die zumindest in einer ersten Stellung zumindest einen überwiegenden ersten Teil (12a) der Überführungsstrecke (12) ausbildet, wobei die Überführungseinrichtung (10) ein Überführungsantriebselement (16) aufweist, das zum Antreiben des gepressten Rundballens (6) zur Wickeleinrichtung (8) relativ zur Überführungsstreckenvorrichtung (14) zumindest anteilig in die Überführungsrichtung (U) in zumindest eine Antreibestellung (IV) beweglich gelagert ist, in der die Überführungsstreckenvorrichtung (14) zumindest teilweise zwischen dem Überführungsantriebselement (16) und einer Aufstandsebene (E1) der Rundballenpresse (2) angeordnet ist, wobei die Überführungsstreckenvorrichtung (14) zumindest eine Überführungsstreckenvorrichtungseinheit (28) aufweist, die aus einer ersten Stellung (i), in der die Überführungsstreckenvorrichtungseinheit (28) bei Anordnung der Überführungsstreckenvorrichtung (14) in der ersten Stellung angeordnet ist, relativ zu einem/dem Maschinenrahmen (60) der Rundballenpresse (2) um eine Streckenschwenkachse (S2) in eine zweite Stellung (ii) schwenkbeweglich gelagert ist, und wobei die Überführungseinrichtung (10) zumindest eine Stelleinrichtung (20) mit einem Stellelement (22) zur Bewegung des Überführungsantriebselementes (16) zumindest in die Antreibestellung (IV) aufweist, **dadurch gekennzeichnet, dass** die Stelleinrichtung (20) zumindest ein Übertragungselement (30) aufweist, mittels dem die Stelleinrichtung (20) zu einer Bewegung der Überführungsstreckenvorrichtungseinheit (28) von der ersten Stellung (i) in eine zweite Stellung (ii) ausgebildet ist.

2. Rundballenpresse nach Anspruch 1, **dadurch gekennzeichnet, dass** das Überführungsantriebselement (16) zumindest in eine Aufnahmestützstellung (II) beweglich gelagert ist, in der das Überführungsantriebselement (16) einen zweiten Teil (12b) der Überführungsstrecke (12) ausbildet.

3. Rundballenpresse nach Anspruch 2, **dadurch gekennzeichnet, dass** das Überführungsantriebselement (16) derart gelagert ist, dass der zweite Teil (12b) der Überführungsstrecke (12) zwischen der Presskammer (4) und dem ersten Teil (12a) der Überführungsstrecke (12) angeordnet ist.

4. Rundballenpresse nach einem der vorhergehenden Ansprüche 2 oder 3, **dadurch gekennzeichnet, dass** sich das Überführungsantriebselement (16) in der Aufnahmestützstellung (II) in einem zur Presskammer (4) ortsfesten Raumabschnitt erstreckt, in den sich ein Klappenelement (18) der Rundballenpresse (2) in einer Pressstellung, in der das Klappenelement (18) die Presskammer (4) mit ausbildet, erstreckt.

5. Rundballenpresse nach einem der vorhergehenden Ansprüche, **dadurch gekennzeichnet, dass** das Überführungsantriebselement (16) zumindest anteilig schwenkbeweglich um eine Antriebsschwenkachse (S1) gelagert ist.

6. Rundballenpresse nach Anspruch 5, **dadurch gekennzeichnet, dass** die Antriebsschwenkachse (S1) in einem Zwischenraum zwischen der Aufstandsebene (E1) und einer zur Aufstandsebene (E1) parallelen und an die Überführungsstreckenvorrichtung (14) angrenzenden Referenzebene (E2) angeordnet ist, in dem auch die Überführungsstreckenvorrichtung (14) angeordnet ist.

7. Rundballenpresse nach einem der vorhergehenden Ansprüche, **dadurch gekennzeichnet, dass** das Überführungsantriebselement (16) zumindest in eine Abgabestützstellung (V) beweglich gelagert ist, in der eine das Überführungsantriebselement (16) umfassende und insbesondere mit dem Überführungsantriebselement (16) um die Antriebsschwenkachse (S1) schwenkbeweglich gelagerte Überführungsantriebsvorrichtung (62) einen weiteren Teil (12c) der Überführungsstrecke (12) ausbildet, der zwischen dem ersten Teil (12a) und der Wickeleinrichtung (8) angeordnet ist.

8. Rundballenpresse nach einem der vorhergehenden Ansprüche, **dadurch gekennzeichnet, dass** die Stelleinrichtung (20) zu einer Verschwenkung des Überführungsantriebselementes (16) um zumindest 15°, bevorzugt um zumindest 120°, besonders bevorzugt um zumindest 160° ausgebildet ist.

9. Rundballenpresse nach einem der vorhergehenden Ansprüche, **dadurch gekennzeichnet, dass** das Stellelement (22) zumindest in einer Stellung (IV) des Überführungsantriebselementes (16) und in der ersten Stellung der Überführungsstreckenvorrichtung (14) zumindest teilweise zwischen der Überführungsstreckenvorrichtung (14) und der Aufstandsebene (E1) angeordnet ist.

10. Rundballenpresse nach einem der vorhergehenden Ansprüche, **dadurch gekennzeichnet, dass** die Stelleinrichtung (20) eine das Stellelement (22) mit dem Überführungsantriebselement (16) koppelnde Lenkeranordnung umfasst, die einen ersten Lenker (24), der schwenkbeweglich am Stellelement (22) und schwenkbeweglich an einem Maschinenrahmen (60) der Rundballenpresse (2) gelagert ist, und einen zweiten Lenker (26) umfasst, der schwenkbeweglich am ersten Lenker (24) und schwenkbeweglich zum Überführungsantriebselement (16) gelagert ist.

11. Rundballenpresse nach einem der vorhergehenden Ansprüche, **dadurch gekennzeichnet, dass** die Überführungsstreckenvorrichtungseinheit (28) eine von der Streckenschwenkachse (S2) beabstandete Abstützoberfläche (40) aufweist, die derart ausgebildet ist, dass die Überführungsstreckenvorrichtungseinheit (28) zumindest in der ersten Stellung (i) mit der Abstützoberfläche (40) an einem Abstützelement (61) des Maschinenrahmens (60) lösbar anliegt.

12. Rundballenpresse nach einem der vorhergehenden Ansprüche unter Einschluss von Anspruch 2, **dadurch gekennzeichnet, dass** die Stelleinrichtung (20) derart ausgebildet ist, dass das Übertragungselement (30) sich während einer Bewegung des Überführungsantriebselementes (16) von der Aufnahmestützstellung (II) in die Antreibestellung (IV) an ein Übertragungsgegenelement (32) der Überführungsstreckenvorrichtungseinheit (28) anlegt.

13. Rundballenpresse nach Anspruch 12, **dadurch gekennzeichnet, dass** das Übertragungselement (30) und/oder das Übertragungsgegenelement (32) derart ausgeformt sind/ist, dass die Bewegung der Überführungsstreckenvorrichtungseinheit (28) aus der ersten Stellung (i) in der zweiten Stellung (ii) endet, während das Überführungsantriebselement (16) von der Aufnahmestützstellung (II) in die Antreibestellung (IV) bewegt wird.

14. Rundballenpresse nach einem der vorhergehenden Ansprüche 12 oder 13, **dadurch gekennzeichnet, dass** das Übertragungsgegenelement (32) in einem Längsschnitt eine Übertragungskontur (34) aufweist, die einen ersten insbesondere gerade verlaufenden Konturabschnitt (36) und einen zum ersten Konturabschnitt (36) angewinkelten, insbesondere gerade verlaufenden, zweiten Konturabschnitt (38) aufweist.

15. Rundballenpresse nach einem der vorhergehenden Ansprüche, **dadurch gekennzeichnet, dass** die Überführungsstreckenvorrichtung (14) zumindest zwei Überführungsstreckenvorrichtungseinheiten (28) umfasst, die von einer zur Aufstandsebene (E1) rechtwinkligen und zur Überführungsrichtung (U) parallelen Längsmittelebene (E3), die sich zwischen den Überführungsstreckenvorrichtungseinheiten (28) erstreckt, jeweils beabstandet sind und die insbesondere spiegelsymmetrisch zur Längsmittelebene (E3) ausgebildet sind.

16. Rundballenpresse nach einem der vorhergehenden Ansprüche, **dadurch gekennzeichnet, dass** eine/die das Überführungsantriebselement (16) umfassende Überführungsantriebsvorrichtung (62) und/oder die zumindest eine Überführungsstreckenvorrichtungseinheit (28) zumindest ein Rahmenelement (42, 44) und insbesondere zumindest ein drehbar am Rahmenelement (42, 44) gelagertes Rollenelement (46) aufweisen/aufweist.

17. Rundballenpresse nach Anspruch 15 und 16, **dadurch gekennzeichnet, dass** das zumindest eine Rahmenelement (42, 44), insbesondere zwei Rahmenelemente (42, 44), der Überführungsantriebsvorrichtung (62) zumindest in der Aufnahmestützstellung (II) des Überführungsantriebselementes (16) in einer Draufsicht zumindest teilweise zwischen den zwei Überführungsstreckenvorrichtungseinheiten (28) angeordnet ist.

18. Rundballenpresse nach einem der vorhergehenden Ansprüche 16 oder 17 unter Einschluss des Anspruchs 7, **dadurch gekennzeichnet, dass** ein von der Antriebsschwenkachse (S1) beabstandetes Teilstück (48) des zumindest einen Rahmenelementes (42) der Überführungsantriebsvorrichtung (62) sich länglich in eine Teilstückrichtung (T) erstreckt, die in der Abgabestützstellung (V) des Überführungsantriebselementes (16) weniger stark zu der Aufstandsebene (E1) angewinkelt ist als eine auf die Antriebsschwenkachse (S1) bezogene und das Teilstück (48) schneidende Radiale (R1).

19. Rundballenpresse nach einem der vorhergehenden Ansprüche, **dadurch gekennzeichnet, dass** ein von der Streckenschwenkachse (S2) abgewandtes Ende der Überführungsstreckenvorrichtungseinheit (28) von einem Auffangelement (50) ausgebildet ist, das zumindest in der ersten Stellung der Überführungsstreckenvorrichtung (14) und bei Anordnung des Überführungsantriebselementes (16) in der Aufnahmestützstellung (II) zwischen dem Überführungsantriebselement (16) und der Aufstandsebene (E1) angeordnet ist.

20. Rundballenpresse nach einem der vorhergehenden Ansprüche, **dadurch gekennzeichnet, dass** die Wickeleinrichtung (8) einen eine Wickelmulde (52) für den gepressten Rundballen (6) ausbildenden Wickeltisch (51) mit einem Wickeltischrahmen (54) aufweist, wobei die Wickeleinrichtung (8) ein drehbar um eine zum Wickeltischrahmen (54) insbesondere ortsfeste Bremsrollendrehachse (S3) gelagertes Bremsrollenelement (58) aufweist, das zumindest in einer Wickelstellung (W3) des Wickeltisches (51) zwischen der Wickelmulde (52) und der Überführungseinrichtung (10) angeordnet ist.

21. Rundballenpresse nach Anspruch 20, **dadurch gekennzeichnet, dass** das Bremsrollenelement (58) derart am Wickeltischrahmen (54) gelagert ist, dass das Bremsrollenelement (58) in einer Aufnahmestellung (W2) des Wickeltisches (51) zwischen zumindest einem Teil der Überführungsstreckenvorrichtung (14) und der Aufstandsebene (E1) angeordnet ist.

## Claims

1. Roundbaler (2) for agricultural crops, which forms a pressing chamber (4) for pressing a round bale (6), has a wrapping device (8) for wrapping the pressed round bale (6) with a wrapping material, and has a transfer device (10) configured for forming a transfer section (12) via which the pressed round bale (6) is transferable in a transfer direction (U) from the pressing chamber (4) to the wrapping device (8) and comprising at least one transfer-section apparatus (14) which, at least in a first position, forms at least a predominant first part (12a) of the transfer section (12), wherein the transfer device (10) has a transfer drive element (16) which, for driving the pressed round bale (6) to the wrapping device (8), is mounted so as to be moveable at least partially in the transfer direction (U) relative to the transfer-section apparatus (14) into at least one drive position (IV), in which the transfer-section apparatus (14) is arranged at least partially between the transfer drive element (16) and a standing plane (E1) of the roundbaler (2), wherein the transfer-section apparatus (14) has at least one transfer-section-apparatus unit (28) which is mounted so as to be pivotable about a section pivot axis (S2) relative to a/the machine frame (60) of the roundbaler (2) from a first position (i), in which the transfer-section-apparatus unit (28) is arranged when the transfer-section apparatus (14) is arranged in the first position, into a second position (ii), and wherein the transfer device (10) has at least one positioning device (20) with a positioning element (22) for moving the transfer drive element (16) at least into the drive position (IV), **characterized in that** the positioning device (20) has at least one transmission element (30) by means of which the positioning device (20) is configured for a movement of the transfer-section-apparatus unit (28) from the first position (i) into a second position (ii).

2. Roundbaler according to Claim 1, **characterized in that** the transfer drive element (16) is mounted so as to be movable at least into a receiving supporting position (II), in which the transfer drive element (16) forms a second part (12b) of the transfer section (12).

3. Roundbaler according to Claim 2, **characterized in that** the transfer drive element (16) is mounted in such a way that the second part (12b) of the transfer section (12) is arranged between the pressing chamber (4) and the first part (12a) of the transfer section (12).

4. Roundbaler according to either of preceding Claims 2 and 3, **characterized in that**, in the receiving supporting position (II), the transfer drive element (16) extends in a space portion which is positionally fixed in relation to the pressing chamber (4) and into which a flap element (18) of the roundbaler (2) extends in a pressing position in which the flap element (18) forms part of the pressing chamber (4).

5. Roundbaler according to one of the preceding claims, **characterized in that** the transfer drive element (16) is mounted so as to be at least partially pivotable about a drive pivot axis (S1).

6. Roundbaler according to Claim 5, **characterized in that** the drive pivot axis (S1) is arranged in an intermediate space between the standing plane (E1) and a reference plane (E2), which is parallel to the standing plane (E1) and adjacent to the transfer-section apparatus (14), in which intermediate space the transfer-section apparatus (14) is also arranged.

7. Roundbaler according to one of the preceding claims, **characterized in that** the transfer drive element (16) is mounted so as to be movable at least into a delivery supporting position (V), in which a transfer drive apparatus (62) comprising the transfer drive element (16) and mounted so as to be pivotable, in particular by way of the transfer drive element (16), about the drive pivot axis (S1) forms a further part (12c) of the transfer section (12), which further part is arranged between the first part (12a) and the wrapping device (8).

8. Roundbaler according to one of the preceding claims, **characterized in that** the positioning device (20) is configured for pivoting the transfer drive element (16) through at least 15°, preferably through at least 120°, particularly preferably through at least 160°.

9. Roundbaler according to one of the preceding claims, **characterized in that**, at least in one position (IV) of the transfer drive element (16) and in the first position of the transfer-section apparatus (14), the positioning element (22) is arranged at least partially between the transfer-section apparatus (14) and the standing plane (E1).

10. Roundbaler according to one of the preceding claims, **characterized in that** the positioning device (20) comprises a link arrangement which couples the positioning element (22) to the transfer drive element (16) and which comprises a first link (24), which is mounted pivotably on the positioning element (22) and pivotably on a machine frame (60) of the roundbaler (2), and a second link (26), which is mounted pivotably on the first link (24) and pivotably in relation to the transfer drive element (16).

11. Roundbaler according to one of the preceding claims, **characterized in that** the transfer-section-apparatus unit (28) has a supporting surface (40) which is spaced apart from the section pivot axis (S2) and which is configured in such a way that, at least in the first position (i), the transfer-section-apparatus unit (28) abuts releasably, by way of the supporting surface (40), against a supporting element (61) of the machine frame (60).

12. Roundbaler according to one of the preceding claims with the inclusion of Claim 2, **characterized in that** the positioning device (20) is configured in such a way that, during a movement of the transfer drive element (16) from the receiving supporting position (II) into the drive position (IV), the transmission element (30) comes to abut against a transmission counterpart element (32) of the transfer-section-apparatus unit (28).

13. Roundbaler according to Claim 12, **characterized in that** the transmission element (30) and/or the transmission counterpart element (32) are/is formed in such a way that the movement of the transfer-section-apparatus unit (28) from the first position (i) ends at the second position (ii) as the transfer drive element (16) is moved into the drive position (IV) from the receiving supporting position (II).

14. Roundbaler according to either of preceding Claims 12 and 13, **characterized in that**, in a longitudinal section, the transmission counterpart element (32) has a transmission contour (34) having a first, in particular straight, contour portion (36) and having a second, in particular straight, contour portion (38) which is at an angle to the first contour portion (36).

15. Roundbaler according to one of the preceding claims, **characterized in that** the transfer-section apparatus (14) comprises at least two transfer-section-apparatus units (28) spaced apart in each case from a longitudinal central plane (E3), which is perpendicular to the standing plane (E1) and parallel to the transfer direction (U) and extends between the transfer-section-apparatus units (28), and formed in particular mirror-symmetrically in relation to the longitudinal central plane (E3).

16. Roundbaler according to one of the preceding claims, **characterized in that** a/the transfer drive apparatus (62), which comprises the transfer drive element (16), and/or the at least one transfer-section-apparatus unit (28) have/has at least one frame element (42, 44) and in particular at least one roller element (46) which is mounted rotatably on the frame element (42, 44).

17. Roundbaler according to Claims 15 and 16, **characterized in that**, at least in the receiving supporting position (II) of the transfer drive element (16), the at least one frame element (42, 44), in particular two frame elements (42, 44), of the transfer drive apparatus (62) is/are, in a plan view, arranged at least partially between the two transfer-section-apparatus units (28).

18. Roundbaler according to either of preceding Claims 16 and 17 with the inclusion of Claim 7, **characterized in that** a piece (48), spaced apart from the drive pivot axis (S1), of the at least one frame element (42) of the transfer drive apparatus (62) extends longitudinally in a piece direction (T) which, in the delivery supporting position (V) of the transfer drive element (16), is at a shallower angle to the standing plane (E1) than a radial (R1) associated with the drive pivot axis (S1) and intersecting the piece (48).

19. Roundbaler according to one of the preceding claims, **characterized in that** an end of the transfer-section-apparatus unit (28) that is relatively remote from the section pivot axis (S2) is formed by a catch element (50) which, at least in the first position of the transfer-section apparatus (14) and with the transfer drive element (16) arranged in the receiving supporting position (II), is arranged between the transfer drive element (16) and the standing plane (E1).

20. Roundbaler according to one of the preceding claims, **characterized in that** the wrapping device (8) has a wrapping table (51) which forms a wrapping trough (52) for the pressed round bale (6) and which has a wrapping-table frame (54), wherein the wrapping device (8) has a brake roller element (58) which is mounted so as to be rotatable about a brake-roller axis of rotation (S3), the latter being in particular positionally fixed in relation to the wrapping-table frame (54), and which, at least in one wrapping position (W3) of the wrapping table (51), is arranged between the wrapping trough (52) and the transfer device (10).

21. Roundbaler according to Claim 20, **characterized in that** the brake roller element (58) is mounted on the wrapping-table frame (54) in such a way that the brake roller element (58), in a receiving position (W2) of the wrapping table (51), is arranged between at least a part of the transfer-section apparatus (14) and the standing plane (E1).

## Revendications

1. Presse à balles rondes (2) destinée à des produits agricoles de récolte, qui forme une chambre de pressage (4) destinée à presser une balle ronde (6), qui comporte un système d'enroulement (8) destiné à envelopper la balle ronde (6) pressée d'un matériau d'emballage et un système de transfert (10), qui est mis au point pour former une section de transfert (12), par laquelle la balle ronde (6) pressée peut être transférée dans une direction de transfert (U) de la chambre de pressage (4) au système d'enroulement (8), au moins un dispositif de section de transfert (14), qui forme au moins dans une première position au moins une première partie prédominante (12a) de la section de transfert (12), le système de transfert (10) comportant un élément d'entraînement de transfert (16), qui, pour l'entraînement de la balle ronde (6) pressée vers le système d'enroulement (8), est monté de manière mobile, par rapport au dispositif de section de transfert (14), au moins proportionnellement dans la direction de transfert (U) dans au moins une position d'entraînement (IV), dans laquelle le dispositif de section de transfert (14) est disposé au moins en partie entre l'élément d'entraînement de transfert (16) et un plan vertical (E1) de la presse à balles rondes (2), le dispositif de section de transfert (14) comportant au moins une unité de dispositif de section de transfert (28), qui est montée de manière mobile par pivotement depuis une première position (i), dans laquelle l'unité de dispositif de section de transfert (28) est disposée lorsque le dispositif de section de transfert (14) est disposé dans la première position, dans une deuxième position (ii) autour d'un axe de pivotement de ligne (S2) par rapport à un/le bâti de machine (60) de la presse à balles rondes (2), et le système de transfert (10) comportant au moins un système de réglage (20) avec un élément de réglage (22) pour déplacer l'élément d'entraînement de transfert (16) au moins dans la position d'entraînement (IV), **caractérisée en ce que** le système de réglage (20) comporte au moins un élément de transmission (30), au moyen duquel le système de réglage (20) est formé pour déplacer l'unité de dispositif de section de transfert (28) de la première position (i) dans une deuxième position (ii).

2. Presse à balles rondes selon la revendication 1, **caractérisée en ce que** l'élément d'entraînement de transfert (16) est monté de manière mobile au moins dans une position de support de réception (II), dans laquelle l'élément d'entraînement de transfert (16) forme une deuxième partie (12b) de la section de transfert (12).

3. Presse à balles rondes selon la revendication 2, **caractérisée en ce que** l'élément d'entraînement de transfert (16) est monté de telle manière que la deuxième partie (12b) de la section de transfert (12) est disposée entre la chambre de pressage (4) et la première partie (12a) de la section de transfert (12).

4. Presse à balles rondes selon l'une des revendications précédentes 2 ou 3, **caractérisée en ce que** l'élément d'entraînement de transfert (16) s'étend, dans la position de support de réception (II), dans une section spatiale fixe par rapport à la chambre de pressage (4), dans laquelle s'étend un élément de clapet (18) de la presse à balles rondes (2) dans une position de pressage, dans laquelle l'élément de clapet (18) forme conjointement la chambre de pressage (4).

5. Presse à balles rondes selon l'une des revendications précédentes, **caractérisée en ce que** l'élément d'entraînement de transfert (16) est monté au moins proportionnellement de manière mobile par pivotement autour d'un axe de pivotement d'entraînement (S1).

6. Presse à balles rondes selon la revendication 5, **caractérisée en ce que** l'axe de pivotement d'entraînement (S1) est disposé dans un espace intermédiaire entre le plan vertical (E1) et un plan de référence (E2) parallèle au plan vertical (E1) et adjacent au dispositif de section de transfert (14), dans lequel est également disposé le dispositif de section de transfert (14).

7. Presse à balles rondes selon l'une des revendications précédentes, **caractérisée en ce que** l'élément d'entraînement de transfert (16) est monté de manière mobile au moins dans une position d'appui de distribution (V), dans laquelle un dispositif d'entraînement de transfert (62), qui comprend l'élément d'entraînement de transfert (16) et est monté de manière mobile par pivotement autour de l'axe de pivotement d'entraînement (S1) en particulier avec l'élément d'entraînement de transfert (16), forme une autre partie (12c) de la section de transfert (12), qui est disposée entre la première partie (12a) et le système d'enroulement (8).

8. Presse à balles rondes selon l'une des revendications précédentes, **caractérisée en ce que** le système de réglage (20) est formé pour faire pivoter l'élément d'entraînement de transfert (16) d'au moins 15°, de manière préférée d'au moins 120°, de manière particulièrement préférée d'au moins 160°.

9. Presse à balles rondes selon l'une des revendications précédentes, **caractérisée en ce que** l'élément de réglage (22) est disposé au moins en partie entre le dispositif de section de transfert (14) et le plan vertical (E1) au moins dans une position (IV) de l'élément d'entraînement de transfert (16) et dans la première position du dispositif de section de transfert (14).

10. Presse à balles rondes selon l'une des revendications précédentes, **caractérisée en ce que** le système de réglage (20) comprend un ensemble formant bielle couplant l'élément de réglage (22) à l'élément d'entraînement de transfert (16), qui couple une première bielle (24), qui est montée de manière mobile par pivotement sur l'élément de réglage (22) et de manière mobile par pivotement sur un bâti de machine (60) de la presse à balles rondes (2), et une deuxième bielle (26), qui est montée de manière mobile par pivotement sur la première bielle (24) et de manière mobile par pivotement par rapport à l'élément d'entraînement de transfert (16).

11. Presse à balles rondes selon l'une des revendications précédentes, **caractérisée en ce que** l'unité de dispositif de section de transfert (28) comporte une surface d'appui (40) espacée de l'axe de pivotement de section (S2), qui est formée de telle manière que l'unité de dispositif de section de transfert (28) repose de manière amovible avec la surface d'appui (40) sur un élément d'appui (61) du bâti de machine (60) au moins dans la première position (i).

12. Presse à balles rondes selon l'une des revendications précédentes, y compris la revendication 2, **caractérisée en ce que** le système de réglage (20) est formé de telle manière que l'élément de transmission (30) se place sur un contre-élément de transmission (32) de l'unité de dispositif de section de transfert (28) lors d'un déplacement de l'élément d'entraînement de transfert (16) de la position de support de réception (II) dans la position d'entraînement (IV).

13. Presse à balles rondes selon la revendication 12, **caractérisée en ce que** l'élément de transmission (30) et/ou le contre-élément de transmission (32) sont formés de telle manière que le déplacement de l'unité de dispositif de section de transfert (28) de la première position (i) dans la deuxième position (ii) se termine, tandis que l'élément d'entraînement de transfert (16) est déplacé de la position d'appui de réception (II) dans la position d'entraînement (IV).

14. Presse à balles rondes selon l'une des revendications précédentes 12 ou 13, **caractérisée en ce que** le contre-élément de transmission (32) comporte en coupe longitudinale un contour de transmission (34), qui comporte une première section de contour (36), s'étendant en particulier de manière rectiligne, et une deuxième section de contour (38) coudée par rapport à la première section de contour (36), en particulier s'étendant de manière rectiligne.

15. Presse à balles rondes selon l'une des revendications précédentes, **caractérisée en ce que** le dispositif de section de transfert (14) comprend au moins deux unités de dispositif de section de transfert (28), qui sont espacées chacune d'un plan médian longitudinal (E3) perpendiculaire au plan vertical (E1) et parallèle à la direction de transfert (U), lequel s'étend entre les unités de dispositif de section de transfert (28), et qui sont formées en particulier en symétrie miroir par rapport au plan médian longitudinal (E3).

16. Presse à balles rondes selon l'une des revendications précédentes, **caractérisée en ce qu'**un/le dispositif d'entraînement de transfert (62) comprenant l'élément d'entraînement de transfert (16) et/ou l'au moins une unité de dispositif de section de transfert (28) comporte/comportent au moins un élément de bâti (42, 44) et en particulier au moins un élément de rouleau (46) monté de manière à pouvoir tourner sur l'élément de bâti (42, 44).

17. Presse à balles rondes selon les revendications 15 et 16, **caractérisée en ce que** l'au moins un élément de bâti (42, 44), en particulier deux éléments de bâti (42, 44), du dispositif d'entraînement de transfert (62) est disposé dans une vue de dessus au moins en partie entre les deux unités de dispositif de section de transfert (28) au moins dans la position de support de réception (II) de l'élément d'entraînement de transfert (16).

18. Presse à balles rondes selon l'une des revendications précédentes 16 ou 17, y compris la revendication 7, **caractérisée en ce qu'**une pièce partielle (48) de l'au moins un élément de bâti (42) du dispositif d'entraînement de transfert (62), espacée de l'axe de pivotement d'entraînement (S1), s'étend de manière allongée dans une direction de pièce partielle (T), qui, dans la position d'appui de distribution (V) de l'élément d'entraînement de transfert (16), est moins coudé par rapport au plan vertical (E1) qu'une ligne radiale (R1) se rapportant à l'axe de pivotement d'entraînement (S1) et coupant la pièce partielle (48).

19. Presse à balles rondes selon l'une des revendications précédentes, **caractérisée en ce qu'**une extrémité de l'unité de dispositif de section de transfert (28) opposée à l'axe de pivotement de section (S2) est formée par un élément collecteur (50) qui est disposé entre l'élément d'entraînement de transfert (16) et le plan vertical (E1) au moins dans la première position du dispositif de section de transfert (14) et lorsque l'élément d'entraînement de transfert (16) est disposé dans la position de support de réception (II).

20. Presse à balles rondes selon l'une des revendications précédentes, **caractérisée en ce que** le système d'enroulement (8) comporte une table d'enroulement (51) formant une cavité d'enroulement (52) pour la balle ronde (6) pressée avec un bâti de table d'enroulement (54), le système d'enroulement (8) comportant un élément de rouleau de frein (58) monté de manière à pouvoir tourner autour d'un axe de rotation de rouleau de frein (S3), en particulier fixe par rapport au bâti de table d'enroulement (54), qui, au moins dans une position d'enroulement (W3) de la table d'enroulement (51), est disposé entre la cavité d'enroulement (52) et le système de transfert (10).

21. Presse à balles rondes selon la revendication 20, **caractérisée en ce que** l'élément de rouleau de frein (58) est monté de telle manière sur le bâti de table d'enveloppement (54) que l'élément de rouleau de frein (58) est disposé dans une position de réception (W2) de la table d'enroulement (51) entre au moins une partie du dispositif de section de transfert (14) et le plan vertical (E1).
